# FASCICULE DE BREVET EUROPEEN

(11) **EP 1 973 821 B1**
(45) Date de publication et mention de la délivrance du brevet: **13.02.2013**
(21) Numéro de dépôt: 06847073.1
(22) Date de dépôt: 19.12.2006
(51) Int. Cl.: B65G 47/86

(54) **DISPOSITIF D'AIGUILLAGE DE RECIPIENTS**
WEICHENVORRICHTUNG FÜR BEHÄLTER
CONTAINER SWITCHING DEVICE

(30) Priorité: 26.12.2005 FR 0513334
(43) Date de publication de la demande: 01.10.2008
(73) Titulaire: Sidel Participations, 76930 Octeville sur Mer (FR)
(72) Inventeur: LANGLOIS, Pierre-François, F-76930 Octeville sur Mer (FR); HEUZEBROC, Pierre, F-76930 Octeville sur Mer (FR); NGUYEN VAN, Daniel, F-76930 Octeville sur Mer (FR)
(74) Mandataire: Cabinet Plasseraud
(86) Numéro de dépôt international: PCT/FR2006/002793
(87) Numéro de publication internationale: WO 2007/077320

(56) Documents cités:
- FR-A- 2 867 171
- GB-A- 1 455 569
- US-A- 3 488 994
- US-A- 4 596 107
- US-B1- 6 779 651

## Description

La présente invention se rapporte aux installations de transfert de corps creux, tels que des récipients, de type bouteille, ou préformes, une préforme étant généralement un objet sensiblement tubulaire fermé à une extrémité axiale et dont l'ouverture présente la forme définitive du col du corps creux final, tel qu'une bouteille ou un flacon.

L'invention trouve une application avantageuse dans les installations de soufflage de récipients, installations dans lesquelles des préformes sont alimentées dans un four de conditionnement thermique avant d'être transférées vers une machine de soufflage qui comporte un grand nombre d'unités de soufflage ou d'étirage soufflage avec au moins un moule montés sur une machine tournante de type carrousel. A la sortie du carrousel de soufflage, il est souhaitable de pouvoir éjecter du flot de récipients fabriqués les très rares récipients non conformes, à savoir les récipients non correctement moulés ou soufflés. Avantageusement, ces récipients non conformes doivent suivre un trajet particulier permettant leur comptage et l'analyse des défauts, cette analyse étant corrélée aux valeurs des paramètres de soufflage.

Autrement dit, l'invention trouvera des applications dans les machines de convoyage de récipients, tout particulièrement par le col. L'application avantageuse de l'invention porte préférentiellement sur la séparation de bouteilles non conformes d'un flot de bouteilles sortant d'une machine de soufflage ou d'étirage soufflage, notamment bouteilles en PET ou PEN. Il est entendu toutefois qu'une installation selon l'invention pourra être employée à d'autres fins. Par exemple, l'installation peut permettre de diviser un flot d'articles en plusieurs flots ayant ou non le même débit, cette division en flots distincts étant liée ou non à une caractéristique des articles tels que par exemple des bouteilles. Il est ainsi possible de séparer les articles tels que par exemple des bouteilles en fonction de leur couleur, de la forme de leur corps, etc.

Par ailleurs, compte tenu des cadences de production de plus en plus élevées, il est possible que la cadence de production d'un des postes de travail en amont soit plus élevée que d'autres postes de travail en aval. Il serait ainsi intéressant de pouvoir aiguiller un flot de récipients, par exemple issu de la machine de soufflage, vers deux postes de travail en aval, par exemple des postes d'étiquetage ou de marquage, afin de ne pas réduire la cadence de production des récipients en amont.

Il serait donc particulièrement intéressant de pouvoir répartir et diviser en plusieurs flots un même flot de récipients vers d'autres postes, que ce soit vers un autre poste de travail ou vers un poste pour la mise au rebut ou l'éjection des récipients soufflés, et ce à des cadences de production élevées.

On connaît déjà des dispositifs d'éjection de récipients non conformes, en sortie de carrousel de soufflage. Le brevet US 5 591 462 illustre une machine de la demanderesse, pourvue de moyens de contrôle de la qualité des produits soufflés, avec un système d'éjection des récipients non conformes. L'éjection des récipients est réalisée, sur les machines antérieures de la demanderesse, par un sabre piloté par un vérin. Les cadences élevées des machines de soufflage de dernière génération ne permettent plus l'utilisation efficace de ce sabre, la commande du vérin n'ayant pas un temps de réaction suffisant.

Le document US 3 488 994 présente également un dispositif d'aiguillage du type à sabre piloté par un vérin. Toutefois, ce mode de réalisation ne permet pas d'atteindre des cadences élevées d'aiguillage des récipients aiguillés par ce dispositif.

Il a été également proposé dans le document US 4 596 107 un dispositif d'aiguillage dans lequel les bras de préhensions suivent un chemin de came sur le pourtour d'un plateau transversal fixe, une came escamotable verticalement étant apte à couper le chemin de roulement de manière à aiguiller un second flot de récipients vers une autre sortie. Toutefois, ce mode de réalisation est relativement complexe et volumineux à mettre en oeuvre, notamment au niveau des moyens d'escamotage de la came escamotable. De plus, un dispositif d'aiguillage dans lequel les bras de préhensions suivent un chemin de came ayant une section escamotable est connu du document GB 1455 569.

Pour résoudre les problèmes liés à l'art antérieur, la présente invention porte sur un dispositif d'aiguillage de récipients tournant autour d'un axe de rotation fixe et comprenant une pluralité de bras de préhension d'au moins un récipient prévus de manière périphérique autour de l'axe de rotation, chaque bras de préhension comprenant un suiveur de came apte à coopérer avec un chemin de roulement d'une came, le chemin de roulement présentant au moins une section fixe et au moins une section amovible à came escamotable, la section escamotable, lorsque mise en place, permettant à au moins un bras de préhension de suivre une trajectoire distincte de celle suivie par les bras de préhension lorsque la section escamotable est escamotée dudit chemin de roulement, caractérisé en ce qu'il comprend au moins un plateau transversal rotatif sur lequel sont fixés les bras de préhension radialement mobiles et au moins un plateau transversal fixe dans lequel est formé le chemin de roulement du suiveur de came du bras de préhension, et en ce que la section amovible est escamotable de manière sensiblement parallèle à l'axe de rotation à l'aide d'un actionneur fixé sur le plateau transversal fixe.

Selon ce mode de réalisation, il est ainsi possible d'obtenir une cadence d'aiguillage des récipients plus élevée par rapport aux dispositifs selon l'art antérieur tout en limitant le volume d'encombrement des moyens d'escamotage de la section de came escamotable.

Afin de réaliser un dispositif d'aiguillage plus compact avec un chemin de roulement de came à l'intérieur du plateau dans lequel est formé le chemin de roulement et non sur le pourtour d'un plateau transversal fixe, la section amovible escamotable est apte à compléter au moins partiellement une ouverture dans le plateau transversal fixe

Afin de permettre la saisie des récipients et d'autoriser la formation de plusieurs sorties de récipients, chaque bras de préhension est monté radialement coulissant.

Afin de garantir le retour des bras de préhension dans leur position initiale avant la saisie des récipients par les bras de préhension, le dispositif d'aiguillage selon l'invention comprend des moyens aptes à exercer une force de contraction radiale sur chaque bras de préhension.

Selon une forme de réalisation avantageuse, chaque bras de préhension coulisse à l'encontre de moyens ressort.

Toujours selon une forme de réalisation avantageuse pour permettre le coulissement radial ainsi que la contraction radiale des bras de préhension, chaque bras de préhension est monté coulissant, à l'encontre des moyens ressort, sur un rail de guidage.

Afin de permettre la contraction des bras de préhension, le rail de guidage est apte à coulisser dans un sabot fixé sur le plateau transversal rotatif.

Afin de limiter l'encombrement et le volume occupés par le dispositif selon l'invention, le plateau transversal rotatif est prévu en vis-à-vis de la face du plateau transversal fixe dans laquelle est formé le chemin de roulement du galet du bras de préhension.

Afin de permettre un aiguillage de récipients à une cadence élevée, l'actionneur est du type vérin à double effet.

De manière avantageuse, le plateau transversal fixe comprend une section apte à contraindre les suiveurs de came à se rapprocher de l'axe de rotation.

Afin de permettre la saisie des récipients, chaque bras de préhension comprend une extrémité de préhension conformée en pince portée par un bras support.

Afin de permettre la séparation d'un flot de récipients en plusieurs flots, l'extrémité de préhension conformée en pince est apte à passer en regard d'au moins un couloir de guidage de récipients.

Afin d'augmenter les cadences de production et d'aiguillage des récipients, la roue d'aiguillage comprend un premier ensemble de bras de préhension dont les mouvements sont commandés par un chemin de roulement formé dans un plateau transversal fixe inférieur ainsi qu'un deuxième ensemble de bras de préhension dont les mouvements sont commandés par un chemin de roulement formé dans un plateau transversal fixe supérieur.

De manière avantageuse, chaque bras de préhension comprend des moyens de butée aptes à limiter le coulissement du bras de préhension.

Selon une forme de réalisation préférentielle du plateau transversal fixe, le chemin de roulement comprend : un premier secteur angulaire correspondant à un mouvement sensiblement en arc de cercle des bras de préhension ; un deuxième secteur dans lequel les galets se rapprochent de l'axe de rotation de la roue d'éjection, ce mouvement s'effectuant à l'encontre des ressorts; un troisième secteur angulaire dans lequel les galets roulent dans une gorge en s'éloignant de l'axe de rotation de la roue d'éjection ; un quatrième secteur angulaire, le plateau étant pourvu, entre le troisième secteur et le quatrième secteur angulaire, d'un trou traversant au travers duquel passe une came mobile formant la section escamotable.

D'autres objets et avantages de l'invention apparaîtront au cours de la description suivante de modes de réalisation, donnés à titre d'exemples non limitatifs, cette description étant effectuée à la lumière des dessins annexés, dans lesquels :
- la figure 1 est une vue en perspective d'un mode de réalisation de l'invention ;
- la figure 2 est une vue en perspective des bras de préhension prévus sur la roue d'aiguillage;
- la figure 3 est une vue partielle en perspective d'un bras de préhension fixé sur un plateau rotatif inférieur ;
- la figure 4 est une vue en perspective d'un plateau transversal fixe dans lequel est formé le chemin de roulement pour les galets des bras supports de pince de la roue d'aiguillage, ce plateau comportant une ouverture pour la mise en place d'une came escamotable ;
- la figure 5 est une vue supérieure agrandie partielle de la zone du plateau inférieur de la roue d'aiguillage avec la section à came escamotable ;
- la figure 6 est une vue en perspective d'une autre forme de réalisation d'un dispositif d'aiguillage dans lequel les bras de préhension sont soumis à des forces de traction, un seul bras étant représenté par mesure de clarté ;
- La figure 7 est une vue de dessus d'un plateau supportant le chemin de roulement pour les galets des supports de pince de la roue d'aiguillage selon la seconde forme de réalisation de l'invention;
- La figure 8 est une vue en perspective agrandie d'une zone à section de came escamotable incorporée dans le plateau selon la seconde forme de réalisation de la roue d'aiguillage.

La présente invention porte sur un dispositif 1 d'aiguillage de récipients tournant autour d'un axe de rotation fixe 10 et comprenant une pluralité de bras 7 de préhension d'au moins un récipient prévus de manière périphérique autour de l'axe de rotation 10.

Le dispositif 1 selon l'invention se présente sous la forme d'une roue d'aiguillage 8 permettant préférentiellement l'éjection d'une partie des récipients vers une zone de mise au rebut ou une zone de test. La roue d'aiguillage 8 permet le convoyage des récipients de type bouteilles vers au moins deux sorties 11, 12, comprenant chacune un couloir de guidage 13, 14, des moyens permettant de modifier la trajectoire des bras 7 de préhension de la roue d'aiguillage 8 pour placer ces bras 7 de préhension à l'aplomb des couloirs de guidages 13, 14 des récipients.

En suivant le sens de rotation R8 de la roue d'aiguillage 8, l'extrémité de préhension 7a des bras 7 de préhension est sélectivement amenée en regard de la première sortie 11, en entrée du premier couloir de guidage 13. Les récipients ou articles, préférentiellement des bouteilles, portés par ces extrémités 7a, quittent alors ces extrémités 7a pour être convoyés par ce premier couloir de guidage 13. Cette première trajectoire est par exemple celle des bouteilles conformes. L'extrémité 7a de chaque bras 7 de préhension se présente sous la forme d'une pince.

Des moyens permettent de détourner sélectivement certains bras 7 de préhension, de sorte que les extrémités 7a de ces bras 7 ne viennent pas en regard de la première sortie 11, mais viennent en regard de la deuxième sortie 12, en entrée du deuxième couloir de guidage 14. Cette deuxième trajectoire est par exemple celle des bouteilles non conformes, le deuxième couloir de guidage 14 débouchant au droit d'un panier de récupération (non représenté).

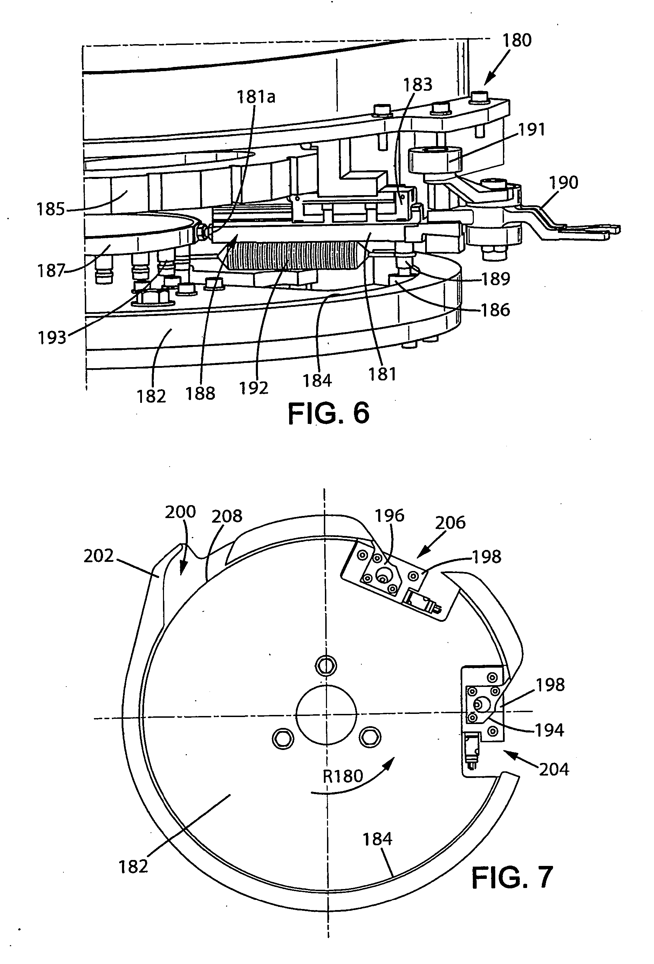

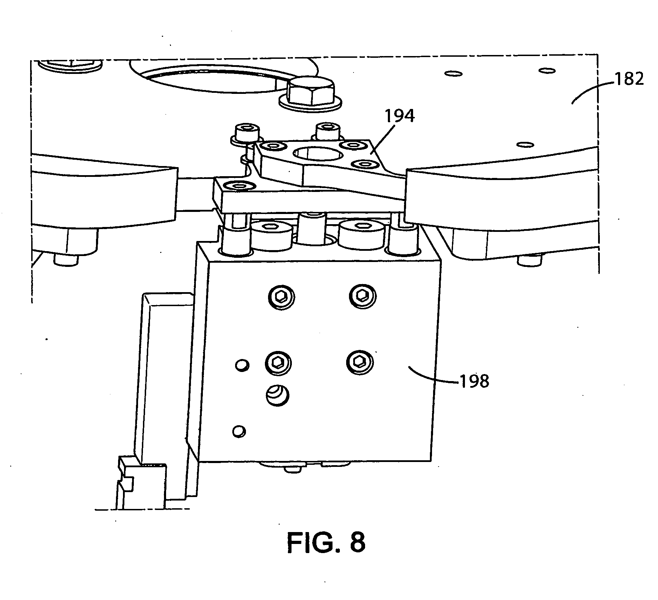

Dans le mode de réalisation représenté, seuls deux couloirs de guidage 13, 14 sont prévus pour la sortie des articles de la roue d'aiguillage 8. De sorte que toutes les extrémités de préhension 7a des bras 7 de préhension peuvent venir en regard de la deuxième sortie 12, les récipients qui n'ont pas quitté les extrémités de préhension 7 pour entrer dans le premier couloir de guidage 13 quittent nécessairement la roue d'aiguillage 8 pour entrer dans le deuxième couloir de guidage 14. Ainsi qu'il apparaîtra à l'homme du métier à la lecture de la suite de cette description, un dispositif d'aiguillage selon l'invention pourrait comporter plus de deux couloirs de sortie pour les articles ou récipients portés par la roue d'aiguillage. Il est ainsi possible de séparer les récipients en deux ou plus de deux flots distincts. Le second mode de réalisation de l'invention tel qu'illustré dans les figures 6 à 8 et qui sera décrit de manière plus précise ci-dessous, présente une telle roue d'aiguillage permettant d'aguiller un flot de récipients en trois flots distincts.

Il est à noter que les récipients de type bouteilles sont convoyés sensiblement dans le même plan depuis l'entrée dans la roue d'aiguillage 8 jusqu'à la première sortie 11 ou la deuxième sortie 12, les couloirs de guidage 13, 14 maintenant également ces récipients dans le même plan de convoyage.

La roue d'aiguillage 8 est montée sur un arbre porté par un châssis 70 qui supporte également les deux couloirs de guidage 13, 14.

La roue d'aiguillage 8 comporte une pluralité de bras de préhension radialement mobiles sous la forme de vingt-quatre bras 7 de préhension sensiblement identiques et équidistants. Un plateau 90a supérieur fixe et un plateau 90b inférieur fixe, transversaux à l'axe de rotation 10 de la roue d'aiguillage 8, forment chacun un support pour un chemin de roulement 91. Chaque extrémité 7a de préhension en forme de pince du bras 7 de préhension est portée par un bras support 92, chaque bras 7 de préhension comprend donc un bras support 92 et une extrémité de préhension 7a supportée par le bras support 92.

Même si l'invention est décrite et illustrée pour deux plateaux 90a, 90b transversaux fixes définissant chacun un chemin de roulement 91 pour un bras 7 de préhension, il est bien entendu que le principe de fonctionnement de la roue d'aiguillage 8 reste identique en présence d'un seul plateau 90a, 90b transversal fixe et d'un seul plateau 152, 153 transversal rotatif sur lequel sont fixés les bras 7 de préhension.

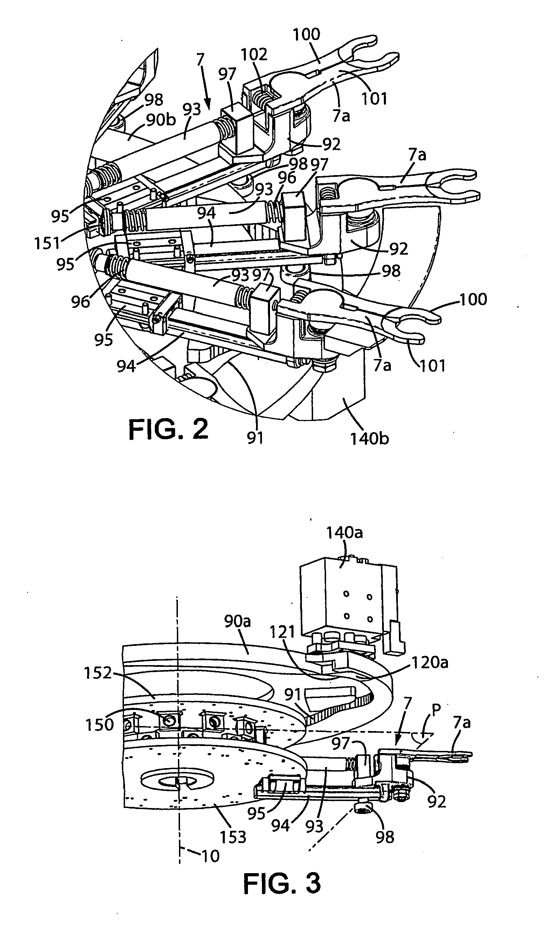

Le bras support 92 est monté coulissant, à l'encontre d'un ressort 93, sur un rail de guidage 94. Chaque rail de guidage 94 est monté sur le plateau 152, 153 transversal rotatif, tel qu'illustré dans la figure 3, par l'intermédiaire d'un sabot 95, qui est fixé sur le plateau 152, 153 transversal rotatif. Le ressort 93 est monté coaxial à un axe de guidage 96 et vient exercer une pression sur une butée 97, cette butée 97 formant support pour l'axe de guidage 96 et formant également support pour un galet 98. C'est ce galet 98 qui vient circuler sur le chemin de roulement 91, à l'encontre du ressort 93.

En fonction de la position du galet 98 sur le chemin de roulement 91 et donc de la distance entre le galet 98 et l'axe de rotation 10, alors le ressort 93 est plus ou moins contracté et le rail de guidage 96 coulisse plus ou moins dans le sabot 95.

L'extrémité de préhension 7a en forme de pince comporte deux demi pinces 100, 101 et un ressort 102, dont le mouvement d'ouverture s'effectue à l'encontre du ressort 102, par pivotement d'une demi pince 100, 101 par rapport à l'autre, l'axe de pivotement étant sensiblement parallèle à l'axe de rotation du galet 98 du support de pince 92.

Le chemin de roulement 91 de chaque plateau 90a, 90b transversal fixe comprend un premier secteur angulaire 110 correspondant à un mouvement sensiblement en arc de cercle des bras 7 de préhension. En suivant le sens de rotation de la roue d'aiguillage 8 (indiqué par la flèche R8), le chemin de roulement 91 comporte, à la suite du premier secteur 110, un deuxième secteur 111 dans lequel les galets 98 se rapprochent de l'axe de rotation 10, ce mouvement s'effectuant à l'encontre des ressorts 93 en entraînant leur contraction. En suivant toujours le sens de rotation de la roue d'aiguillage 8, le chemin de roulement 91 comporte un troisième secteur angulaire 112 dans laquelle les galets 98 roulent dans une gorge 113 délimitée, vers l'intérieur du plateau 90a, 90b transversal fixe, par une saillie 114. Lorsque les galets 98 roulent dans la gorge 113, ils s'éloignent de l'axe de rotation 10 de la roue d'aiguillage 8, de sorte que les extrémités de préhension 7a correspondantes s'éloignent également de cet axe de rotation 10. En suivant toujours l'axe de rotation de la roue d'aiguillage 8, le chemin de roulement 91 porte un quatrième secteur angulaire 115.

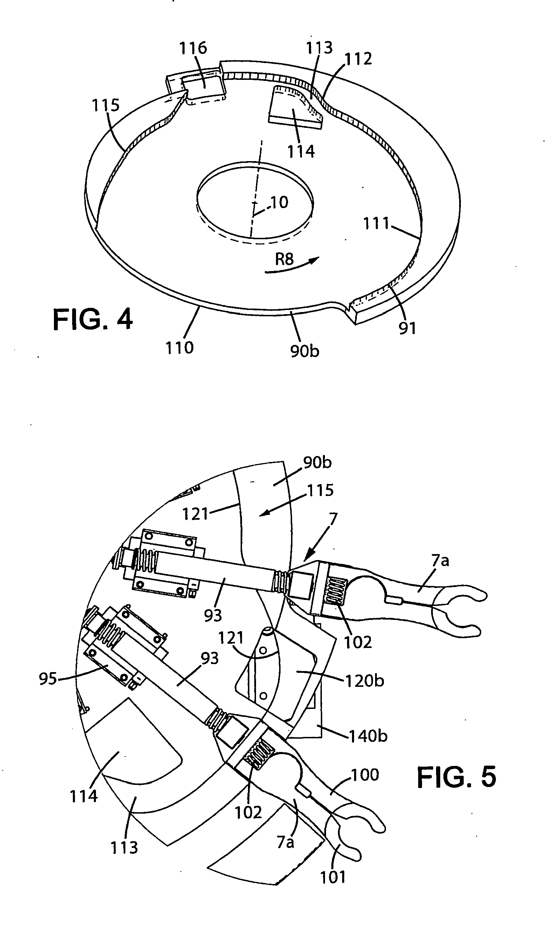

Entre le troisième secteur 112 et le quatrième secteur angulaire 115, le plateau 90a, 90b est pourvu d'un trou traversant 116 au travers duquel passe, le moment venu, une came mobile 120a, 120b, telle que représentée sur les figures 3 et 5.

Lorsque cette came mobile 120a, 120b est absente, les galets 98 sortent de la troisième section 112 du chemin de roulement 91 et décrivent un arc de cercle sur l'ensemble de la quatrième section 115, pour venir au droit de l'entrée du premier couloir de guidage 13.

Lorsque la came mobile 120a, 120b est en place, les galets 98 viennent en appui contre une surface de roulement 121 et les extrémités de préhension 7a correspondantes se rapprochent ainsi de l'axe de rotation 10 de la roue d'aiguillage 8. En conséquence, ces extrémités de préhension 7a ne viennent pas au droit du premier couloir de guidage 13. Lorsque les galets 98 de ces extrémités de préhension 7a entrent dans le premier secteur angulaire 110, ces extrémités de préhension 7a retrouvent la trajectoire commune à toutes les extrémités de préhension 7a. Les bouteilles, par exemple non conformes, portées par ces extrémités de préhension 7a sont ainsi happées en entrée du deuxième couloir de guidage 14.

La roue 8 d'aiguillage comprend un premier ensemble de bras 7 de préhension dont les mouvements sont commandés par un chemin de roulement inférieur 91 d'un plateau inférieur 90b et une came mobile inférieure 120b, chaque bras 7 de préhension étant alors fixé par l'intermédiaire du sabot 95 sur le plateau 153 transversal rotatif inférieur, ainsi qu'un deuxième ensemble de bras 7 de préhension dont les mouvements sont commandés par un chemin de roulement supérieur 91 d'un plateau supérieur 90a et une came mobile supérieure 120a, chaque bras 7 de préhension étant alors fixé par l'intermédiaire du sabot 95 sur un plateau 152 transversal rotatif supérieur. La commande des mouvements du deuxième ensemble de bras 7 de préhension est analogue à celle du premier ensemble de bras 7 de préhension. Par cette disposition, il est possible, à rayon de roue d'aiguillage 8 constant et à vitesse de rotation constante, de doubler le nombre de bras 7 de préhension sur la roue d'aiguillage 8, et donc de doubler le débit de bouteilles convoyées par la roue d'aiguillage 8. Avantageusement, chaque came mobile 120a, 120b a son propre actionneur, tel que par exemple un vérin double effet 140a, 140b, l'actionneur étant prévu sur la face externe du plateau 90a, 90b transversal fixe. Dans le mode de réalisation représenté, la roue d'aiguillage 8 présente une symétrie d'ensemble par rapport à un plan transversal P (voir figure 3) situé sensiblement à mi distance des deux chemins de roulement 91 des plateaux 90a, 90b transversaux fixes supérieur et inférieur. Sur la figure 3 apparaissent les logements 150 des extrémités proximales 151 des axes de guidage 96. Ces logements 150 sont solidaires des deux plateaux 152, 153 transversaux rotatifs annulaires respectivement supérieur et inférieur d'axe 10, l'ensemble de ces deux plateaux secondaires rotatifs 152, 153 étant logé entre le plateau 90a transversal supérieur fixe (définissant le chemin de roulement 91 pour les galets 98 du premier groupe de bras 7 de préhension) et le plateau 90b transversal inférieur fixe (définissant le chemin de roulement 91 pour les galets 98 du deuxième groupe de bras 7 de préhension). Un actionneur, par exemple un vérin double effet 140a, 140b commande le mouvement de la came escamotable 120a, 120b au travers du trou traversant (ou ouverture) 116 du plateau 90a transversal supérieur fixe. De même, un actionneur, par exemple un vérin double effet inférieur 140b commande le mouvement de la came escamotable 120a, 120b au travers du trou traversant 116 du plateau 90b transversal inférieur fixe.

Avantageusement, le dispositif d'aiguillage selon l'invention présente successivement un bras 7 de préhension du premier groupe du plateau 90a transversal supérieur fixe, puis un bras 7 de préhension du deuxième groupe du plateau 90b transversal inférieur fixe, un bras 7 de préhension du plateau 90b transversal inférieur fixe étant entourée de part et d'autre par une pince 7 du plateau 90a transversal supérieur fixe, et inversement, les bras 7 de préhension étant, lorsque vues de dessus, sensiblement équidistants, le même arc angulaire séparant deux bras 7 de préhension successifs.

Les extrémités de préhension 7a venant en regard des entrées 11, 12 des couloirs 13, 14 en fonction de la présence ou non de la section à came escamotable 120a, 120b, le corps des récipients du type bouteilles pénètre alors dans le couloir correspondant 13, 14 en forçant le corps des récipients à s'éloigner de l'axe 10 de la roue d'aiguillage 8, tout en provoquant l'ouverture des extrémités de préhension 7a.

Il est à noter que, dans les machines de soufflage actuelles de récipients, un contrôle optique est effectué sur chaque récipient du type bouteille, en sortie de souffleuse. Compte tenu du débit élevé (de l'ordre de vingt récipients par seconde), du temps de traitement d'images, et de la nécessaire compacité des machines, fort peu de temps doit séparer dans l'idéal la détection d'un récipient non conforme et son éjection du flot.

Puisque le convoyage s'effectue par des supports individuels d'articles, tels que des pinces, l'éjection d'un seul récipient de type bouteille est ainsi possible. Par contraste, les éjecteurs conventionnels placés sur convoyeur à air éliminent plus d'une bouteille.

La figure 6 représente une vue partielle en perspective d'une seconde forme de réalisation possible d'une roue d'aiguillage 180 selon l'invention de sens de rotation R180 comprenant au moins un plateau 182 transversal inférieur fixe définissant intérieurement un chemin de came 184 pour un galet suiveur 186 d'un bras 188 de préhension apte à saisir, à l'aide d'une extrémité de préhension en forme de pince 190, un récipient du type bouteille, l'ouverture et la fermeture de la pince 190 étant contrôlées par un système à came et à galet 191 d'un type connu en soi.

Le bras 188 de préhension, selon cette forme de réalisation, comprend des moyens 192 ressort aptes à exercer une force de traction radiale permettant de maintenir le galet suiveur 186 à une distance sensiblement constante de l'axe de rotation de la roue 180 d'aiguillage et correspondant sensiblement à la distance entre l'axe de rotation et le chemin de came intérieur 184 de la roue d'aiguillage 180.

Afin de permettre l'écartement du galet suiveur 186 de l'axe de rotation, la roue d'aiguillage 180 comprend deux sections 194, 196 à came escamotable aptes à venir couper la trajectoire du galet 186 sur le chemin de came intérieur 184 et à étirer les moyens ressort 192 du bras de préhension 188 de manière telle que le galet 186 sorte de la roue d'aiguillage 180 pour que le récipient porté par l'extrémité 190 de préhension conformée en pince du bras de préhension 188 entre dans un couloir de guidage, par exemple du type tel que précédemment décrit.

Selon ce second mode de réalisation, chaque bras 188 de préhension comprend un rail 181 de guidage apte à coulisser dans un sabot 183 de guidage fixé sur un plateau 185 transversal rotatif, le rail de guidage 181 présentant une extrémité 181a apte à venir en butée contre des moyens d'appui sous la forme d'un second plateau rotatif 187, prévu entre le plateau 182 inférieur fixe et le plateau 185 transversal rotatif.

Les moyens ressort 192 se présentent sous la forme d'un ressort dont une extrémité en crochet est accrochée à une tige 189, prévue sur le rail de guidage 181, sur laquelle est fixée de manière libre le galet 186 suiveur de came, et dont l'autre extrémité en crochet est fixée à un ergot 193 prévu sur le second 187 plateau rotatif.

Chaque section à came 194, 196 est axialement escamotable (c'est-à-dire de manière sensiblement parallèle à l'axe de rotation de la roue d'aiguillage 180) à l'aide d'un actionneur 198, du même type que précédemment décrit, par exemple un actionneur du type vérin hydraulique ou pneumatique à double effet.

De manière supplémentaire, la roue d'aiguillage 188 présente également des moyens 200 de butée aptes à ramener en position contractée les moyens ressort 192 du bras 188 de préhension avec le galet suiveur 186 contre le chemin de came intérieur 184 de la roue 180 d'aiguillage.

Les moyens 200 de butée se présentent sous la forme d'une avancée 202 contre laquelle le galet 186 vient en butée et est apte à rejoindre le chemin de came intérieur 184 de la roue 180 d'aiguillage.

Du fait de la présence de cette avancée 202, il est ainsi possible de faire fonctionner le dispositif d'aiguillage même en cas de rupture des moyens ressort 192, la contraction du bras 188 de préhension dans sa position initiale pouvant se faire soit à l'aide des moyens 192 ressort, soit à l'aide de l'avancée 202 forçant le galet 186 à revenir contre le chemin de roulement 184 du plateau 182 transversal fixe.

Selon ce mode de réalisation, la roue d'aiguillage 180 présente trois sections angulaires formant décrochements 204, 206, 208 du chemin de came intérieur 184, le premier décrochement 204 correspondant à l'emplacement de la première section à came escamotable 194 et formant ainsi une ouverture 204 dans le plateau transversal 182, le second décrochement 206 correspondant à l'emplacement de la seconde section à came escamotable 196 et formant ainsi une ouverture 206 dans le plateau transversal 182 et le troisième décrochement 208 correspondant à l'emplacement de l'avancée 202 et au décrochement à travers lequel le galet 186 est apte à revenir en roulement contre le chemin de came intérieur 184.

Il est ainsi possible selon ce second mode de réalisation de diviser en trois flots un même flot de récipients, un premier flot étant issu des récipients dont les bras 188 de préhension sont venus en butée contre la première section à came 194, un second flot étant issu des récipients dont les bras 188 de préhension sont venus en buée contre la seconde section à came 196 et un troisième flot étant issu des récipients dont les bras 188 de préhension ne sont pas venus en butée contre les première et seconde sections à came escamotable 194, 196.

Autrement dit et de manière résumée, la présente invention porte sur un dispositif d'aiguillage 1 de récipients tournant autour d'un axe 10 de rotation fixe et comprenant une pluralité de bras 7, 188 de préhension d'au moins un récipient prévus de manière périphérique autour de l'axe 10 de rotation, chaque bras 7, 188 de préhension comprenant un suiveur 98, 186 de came apte à coopérer avec un chemin 91, 184 de roulement d'une came, le chemin 91, 184 de roulement présentant au moins une section 111, 112, 115 fixe et au moins une section 120a, 120b, 194, 196 amovible à came escamotable, la section 120a, 120b, 194, 196 escamotable, lorsque mise en place, permettant à au moins un bras 7, 188 de préhension de suivre une trajectoire distincte de celle suivie par les bras 7, 188 de préhension lorsque la section 120a, 120b, 194, 196 escamotable est escamotée dudit chemin 91, 184 de roulement, caractérisé en ce qu'il comprend au moins un plateau 152, 153, 185 transversal rotatif sur lequel sont fixés les bras 7, 188 de préhension et au moins un plateau 90a, 90b, 182 transversal fixe dans lequel est formé le chemin 91, 184 de roulement du suiveur 98, 186 de came du bras 7, 188 de préhension, et en ce que la section 120a, 120b, 194, 196 amovible est escamotable de manière sensiblement parallèle à l'axe 10 de rotation à l'aide d'un actionneur 140a, 140b fixé sur le plateau (90a, 90b, 182) transversal fixe.

La section 120a, 120b, 194, 196 escamotable est apte à compléter au moins partiellement une ouverture 116, 204, 206 dans le plateau 90a, 90b, 182 transversal fixe.

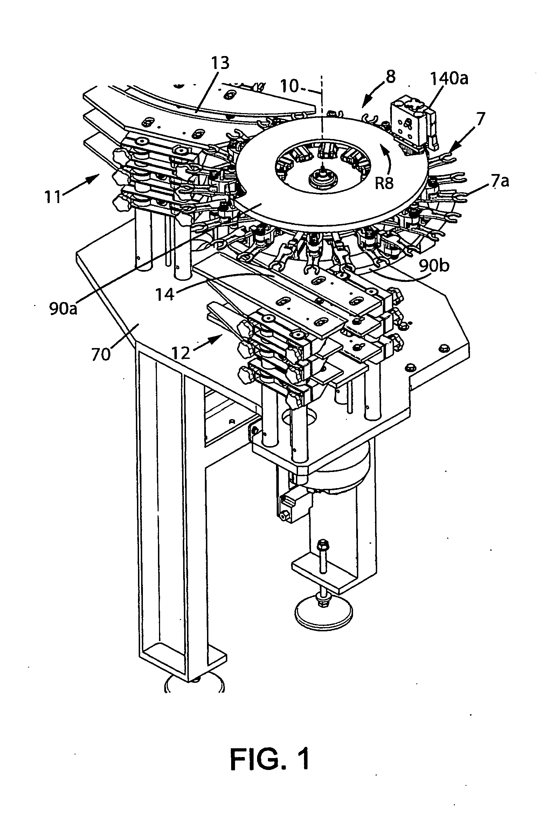

En effet, selon le premier mode de réalisation illustré dans les figures 1 à 5, la section 120a, 120b à came escamotable vient partiellement s'insérer dans le trou ou l'ouverture 116 et vient également compléter l'ouverture dans le chemin de roulement 91 du plateau 90a, 90b transversal fixe tandis que selon le second mode de réalisation illustré dans les figures 6 à 8, chacune des sections 194, 196 à came escamotable vient partiellement s'insérer dans une ouverture ou un décrochement 204, 206 formé dans le plateau 184 transversal. Il est ainsi possible grâce à l'invention de former des chemins de roulement à l'intérieur de plateaux et donc de réduire l'encombrement total généré par un tel dispositif d'aiguillage de récipients tout en augmentant la cadence des récipients aiguillés.

Chaque bras 7, 188 de préhension est monté radialement coulissant, préférentiellement à l'encontre de moyens ressort 93, 192, et de manière encore plus préférentielle sur un rail 94, 181 de guidage, et le dispositif d'aiguillage selon l'invention comprend des moyens 93, 192, 202 aptes à exercer une force de contraction radiale sur chaque bras 7, 188 de préhension. Dans le cas du premier mode de réalisation, ces moyens sont des moyens ressort 93 tandis que dans le second mode de réalisation, ces moyens peuvent être soit les moyens ressort 192, soit la présence de l'avancée 202 en bordure du plateau 184 transversal fixe, soit une combinaison des deux.

Le rail 94, 181 de guidage est apte à coulisser dans un sabot 95, 183 fixé sur un plateau 152, 153, 185 secondaire rotatif qui est prévu en vis-à-vis de la face du plateau 90a, 90b, 182 transversal fixe dans laquelle est formé le chemin 91, 184 de roulement du galet 98, 186 du bras 7, 188 de préhension.

La section 120a, 120b, 194, 196 escamotable est mise en mouvement par un actionneur 140a, 140b du type vérin à double effet.

Le plateau 90a, 90b, 182 transversal fixe comprend une section 115, 202 apte à contraindre les suiveurs 98, 186 de came à se rapprocher de l'axe 10 de rotation.

Chaque bras 7, 188 de préhension comprend une extrémité 7a, 190 de préhension conformée en pince portée par un bras 92 support.

L'extrémité 7a, 190 de préhension conformée en pince est apte à passer en regard d'au moins un couloir 13, 14 de guidage de récipients.

Chaque bras 7, 188 de préhension comprend des moyens 97, 187 de butée aptes à limiter le coulissement du bras 7, 188 de préhension.

## Revendications

1. Dispositif d'aiguillage (1) de récipients tournant autour d'un axe (10) de rotation fixe et comprenant une pluralité de bras (7, 188) de préhension d'au moins un récipient prévus de manière périphérique autour de l'axe (10) de rotation, chaque bras (7, 188) de préhension comprenant un suiveur (98, 186) de came apte à coopérer avec un chemin (91, 184) de roulement d'une came, le chemin (91, 184) de roulement présentant au moins une section (111, 112, 115) fixe et au moins une section (120a, 120b, 194, 196) amovible à came escamotable, la section (120a, 120b, 194, 196) escamotable, lorsque mise en place, permettant à au moins un bras (7, 188) de préhension de suivre une trajectoire distincte de celle suivie par les bras (7, 188) de préhension lorsque la section (120a, 120b, 194, 196) escamotable est escamotée dudit chemin (91, 184) de roulement, le dispositif comprenant au moins un plateau (152, 153, 185) transversal rotatif sur lequel sont fixés les bras (7, 188) de préhension radialement mobiles, **caractérisé en ce qu'**il comprend au moins un plateau (90a, 90b, 182) transversal fixe dans lequel est formé le chemin (91, 184) de roulement du suiveur (98, 186) de came du bras (7, 188) de préhension, et **en ce que** la section (120a, 120b, 194, 196) amovible est escamotable de manière sensiblement parallèle à l'axe (10) de rotation à l'aide d'un actionneur (140a, 140b) fixé sur le plateau (90a, 90b, 182) transversal fixe.

2. Dispositif de roue d'aiguillage selon la revendication précédente, **caractérisé en ce que** la section (120a, 120b, 194, 196) escamotable est apte à compléter au moins partiellement une ouverture (116, 204, 206) dans le plateau (90a, 90b, 182) transversal fixe.

3. Dispositif d'aiguillage selon l'une quelconque des revendications précédentes, **caractérisé en ce que** chaque bras (7, 188) de préhension est monté radialement coulissant.

4. Dispositif d'aiguillage selon l'une quelconque des revendications précédentes, **caractérisé en ce qu'**il comprend des moyens (93, 192, 202) aptes à exercer une force de contraction radiale sur chaque bras (7, 188) de préhension.

5. Dispositif d'aiguillage selon l'une quelconque des revendications précédentes, **caractérisé en ce que** chaque bras (7, 188) de préhension coulisse à l'encontre de moyens (93, 192) ressort.

6. Dispositif d'aiguillage selon l'une quelconque des revendications précédentes, **caractérisé en ce que** chaque bras (7, 188) de préhension est monté coulissant, à l'encontre des moyens ressort (93, 192), sur un rail (94, 181) de guidage.

7. Dispositif d'aiguillage selon la revendication précédente, **caractérisé en ce que** ledit rail (94, 181) de guidage est apte à coulisser dans un sabot (95, 183) fixé sur le plateau (152, 153, 185) transversal rotatif.

8. Dispositif d'aiguillage selon l'une quelconque des revendications précédentes, **caractérisé en ce que** le plateau (152, 153, 185) transversal rotatif est prévu en vis-à-vis de la face du plateau (90a, 90b, 182) transversal fixe dans laquelle est formé le chemin (91, 184) de roulement du galet (98, 186) du bras de préhension (7, 188).

9. Dispositif d'aiguillage selon l'une quelconque des revendications précédentes, **caractérisé en ce que** l'actionneur (140a, 140b) est du type vérin à double effet.

10. Dispositif d'aiguillage selon l'une quelconque des revendications précédentes, **caractérisé en ce que** le plateau (90a, 90b, 182) transversal fixe comprend une section (115, 202) apte à contraindre les suiveurs (98, 186) de came à se rapprocher de l'axe (10) de rotation.

11. Dispositif d'aiguillage selon l'une quelconque des revendications précédentes, **caractérisé en ce que** chaque bras (7, 188) de préhension comprend une extrémité (7a, 190) de préhension conformée en pince portée par un bras (92) support.

12. Dispositif d'aiguillage selon la revendication précédente, **caractérisé en ce que** l'extrémité (7a, 190) de préhension conformée en pince est apte à passer en regard d'au moins un couloir (13, 14) de guidage de récipients.

13. Dispositif d'aiguillage selon l'une quelconque des revendications précédentes, **caractérisé en ce que** la roue d'aiguillage (8) comprend un premier ensemble de bras de préhension (7, 188) dont les mouvements sont commandés par un chemin (91, 184) de roulement formé dans un plateau (90b, 184) transversal fixe inférieur ainsi qu'un deuxième ensemble de bras de préhension (7, 188) dont les mouvements sont commandés par un chemin de roulement formé dans un plateau (90a) transversal fixe supérieur.

14. Dispositif d'aiguillage selon l'une quelconque des revendications précédentes, **caractérisé en ce que** chaque bras (7, 188) de préhension comprend des moyens (97, 187) de butée aptes à limiter le coulissement du bras (7, 188) de préhension.

15. Dispositif d'aiguillage selon l'une quelconque des revendications 5 à 7, **caractérisé en ce que** le chemin de roulement (91) comprend:
- un premier secteur angulaire (110) correspondant à un mouvement sensiblement en arc de cercle des bras de préhension (7),
- un deuxième secteur (111) dans lequel les galets (98) se rapprochent de l'axe de rotation (10) de la roue d'aiguillage (8), ce mouvement s'effectuant à l'encontre des ressorts (93);
- un troisième secteur angulaire (112) dans lequel les galets (98) roulent dans une gorge (113) en s'éloignant de l'axe de rotation (10) de la roue d'éjection (8),
- un quatrième secteur angulaire (115), le plateau (90a, 90b) étant pourvu, entre le troisième secteur (112) et le quatrième secteur angulaire (115), d'un trou traversant (116) au travers duquel passe une came mobile (120a, 120b) formant ladite section escamotable.

## Claims

1. A routing device (1) for switching containers, rotating about a fixed axis (10) of rotation and comprising a number of gripping arms (7, 188) for gripping at least one container, the arms being provided at the periphery about the axis (10) of rotation, each gripping arm (7, 188) comprising a cam follower (98, 186) able to collaborate with a runway (91, 184) of a cam, the runway (91, 184) having at least one fixed section (111, 112, 115) and at least one retractable-cam removable section (120a, 120b, 194, 196), the retractable section (120a, 120b, 194, 196), when in position, allowing at least one gripping arm (7, 188) to follow a path separate from that followed by the gripping arms (7, 188) when the retractable section (120a, 120b, 194, 196) is retracted from said runway (91, 184), the device comprising at least one rotary transverse plate (152, 153, 185) to which the radially movable gripping arms (7, 188) are attached, **characterized in that** it comprises at least one fixed transverse plate (90a, 90b, 182) in which the runway (91, 184) for the cam follower (98, 186) of the gripping arm (7, 188) is formed, and **in that** the removable section (120a, 120b, 194, 196) can be retracted more or less parallel to the axis (10) of rotation by an actuator (140a, 140b) fixed to the fixed transverse plate (90a, 90b, 182).

2. The routing wheel device as claimed in the preceding claim, **characterized in that** the retractable section (120a, 120b, 194, 196) is able at least partially to fill an opening (116, 204, 206) in the fixed transverse plate (90a, 90b, 182).

3. The routing device as claimed in either one of the preceding claims, **characterized in that** each gripping arm (7, 188) is mounted such that it can slide radially.

4. The routing device as claimed in any one of the preceding claims, **characterized in that** it comprises means (93, 192, 202) able to exert a radial contraction force on each gripping arm (7, 188).

5. The routing device as claimed in any one of the preceding claims, **characterized in that** each gripping arm (7, 188) slides against the action of spring means (93, 192).

6. The routing device as claimed in any one of the preceding claims, **characterized in that** each gripping arm (7, 188) is mounted such that it can slide, against the action of spring means (93, 192), on a guide rail (94, 181).

7. The routing device as claimed in the preceding claim, **characterized in that** said guide rail (94, 181) is able to slide in a shoe (95, 183) fixed to the rotary transverse plate (152, 153, 185).

8. The routing device as claimed in any one of the preceding claims, **characterized in that** the rotary transverse plate (152, 153, 185) is positioned facing that face of the fixed transverse plate (90a, 90b, 182) in which the runway (91, 184) for the roller (98, 186) of the gripping arm (7, 188) is formed.

9. The routing device as claimed in any one of the preceding claims, **characterized in that** the actuator (140a, 140b) is of the double-acting cylinder type.

10. The routing device as claimed in any one of the preceding claims, **characterized in that** the fixed transverse plate (90a, 90b, 182) comprises a section (115, 202) able to force the cam followers (98, 186) closer to the axis (10) of rotation.

11. The routing device as claimed in any one of the preceding claims, **characterized in that** each gripping arm (7, 188) comprises a gripping end (7a, 190) shaped into a gripper borne by a support arm (92).

12. The routing device as claimed in the preceding claim, **characterized in that** the gripping end (7a, 190) shaped into a gripper is able to move past at least one container-guide lane (13, 14).

13. The routing device as claimed in any one of the preceding claims, **characterized in that** the routing wheel (8) comprises a first set of gripping arms (7, 188), the movements of which are controlled by a runway (91, 184) formed in a lower fixed transverse plate (90b, 184), and a second set of gripping arms (7, 188), the movements of which are controlled by a runway formed in an upper fixed transverse plate (90a).

14. The routing device as claimed in any one of the preceding claims, **characterized in that** each gripping arm (7, 188) comprises stop means (97, 187) able to limit the sliding of the gripping arm (7, 188).

15. The routing device as claimed in any one of claims 5 to 7, **characterized in that** the runway (91) comprises:
- a first angular sector (110) corresponding to a movement of the gripping arms (7) substantially in an arc of a circle,
- a second sector (111) in which the rollers (98) move closer to the axis of rotation (10) of the routing wheel (8), this movement being performed against the action of the springs (93);
- a third angular sector (112) in which the rollers (98) run in a groove (113) away from the axis of rotation (10) of the ejection wheel (8),
- a fourth angular sector (115), the plate (90a, 90b) being provided, between the third sector (112) and the fourth angular sector (115), with a through-hole (116) through which a moving cam (120a, 120b) that forms said retractable section passes.

## Patentansprüche

1. Verteilervorrichtung (1) für Behälter, die sich um eine feststehende Rotationsachse (10) dreht und eine Vielzahl von Greifarmen (7, 188) für mindestens einen Behälter, die peripher zur Rotationsachse (10) vorgesehen sind, wobei jeder Greifarm (7, 188) eine Mitnehmerfolgeeinrichtung (98, 186) aufweist, die geeignet ist, mit einer Laufbahn (91, 184) eines Mitnehmers zusammenzuwirken, wobei die Laufbahn (91, 184) mindestens einen feststehenden Abschnitt (111, 112, 115) und mindestens einen beweglichen einziehbaren Mitnehmerabschnitt (120a, 120b, 194, 196) aufweist, der einziehbare Abschnitt (120a, 120b, 194, 196), wenn in Stellung gebracht, mindestens einem Greifarm (7, 188) ermöglicht, einer Trajektorie zu folgen, die sich von der unterscheidet, die der Greifarm (7, 188) folgt, wenn der einziehbare Abschnitt (120a, 120b, 194, 196) von der Laufbahn (91, 184) eingezogen ist, und die Vorrichtung mindestens eine transversale Rotationsplatte (152, 153, 185) aufweist, auf der die radial beweglichen Greifarme (7, 188) befestigt sind, **dadurch gekennzeichnet, dass** die Vorrichtung mindestens eine transversale feststehende Platte (90a, 90b, 182) aufweist, in der die Laufbahn (91, 184) der Mitnehmerfolgeeinrichtung (98, 186) des Greifarms (7, 188) ausgebildet ist, und dadurch dass der bewegliche Abschnitt (120a, 120b, 194, 196) im Wesentlichen parallel zur Rotationsachse (10) mit Hilfe einer Betätigungseinrichtung (140a, 140b) einziehbar ist, die auf der transversalen feststehenden Platte (90a, 90b, 182) befestigt ist.

2. Verteilerradvorrichtung nach dem vorstehenden Anspruch, **dadurch gekennzeichnet, dass** der einziehbare Abschnitt (120a, 120b, 194, 196) geeignet ist, eine Öffnung (116, 204, 206) in der transversalen feststehenden Platte (90a, 90b, 182) zumindest teilweise zu ergänzen.

3. Verteilervorrichtung nach einem der vorstehenden Ansprüche, **dadurch gekennzeichnet, dass** jeder Greifarm (7, 188) radial verschiebbar montiert ist.

4. Verteilervorrichtung nach einem der vorstehenden Ansprüche, **dadurch gekennzeichnet, dass** sie ein Mittel (93, 192, 202) aufweist, das geeignet ist, eine radiale Kontraktionskraft auf jeden Greifarm (7, 188) auszuüben.

5. Verteilervorrichtung nach einem der vorstehenden Ansprüche, **dadurch gekennzeichnet, dass** sich jeder Greifarm (7, 188) gegen ein Federmittel (93, 192) verschiebt.

6. Verteilervorrichtung nach einem der vorstehenden Ansprüche, **dadurch gekennzeichnet, dass** jeder Greifarm (7, 188) verschiebbar gegen ein Federmittel (93, 192) auf einer Führungsschiene (94, 181) montiert ist.

7. Verteilervorrichtung nach einem der vorstehenden Ansprüche, **dadurch gekennzeichnet, dass** die Führungsschiene (94, 181) geeignet ist, sich in einem Schlitten (95, 183) zu verschieben, der auf der transversalen Rotationsplatte (152, 153, 185) befestigt ist.

8. Verteilervorrichtung nach einem der vorstehenden Ansprüche, **dadurch gekennzeichnet, dass** die transversale Rotationsplatte (152, 153, 185) gegenüberliegend zu der Seite der transversalen feststehenden Platte (90a, 90b, 182) vorgesehen ist, in der die Laufbahn (91, 184) für die Rolle (98, 186) des Greifarms (7, 188) ausgebildet ist.

9. Verteilervorrichtung nach einem der vorstehenden Ansprüche, **dadurch gekennzeichnet, dass** die Betätigungseinrichtung (140a, 140b) ein doppelwirkender Stellantrieb ist.

10. Verteilervorrichtung nach einem der vorstehenden Ansprüche, **dadurch gekennzeichnet, dass** die transversale feststehende Platte (90a, 90b, 182) einen Abschnitt (115, 202) aufweist, der geeignet ist, die Mitnehmerfolgeeinrichtungen (98, 186) zu zwingen, sich der Rotationsachse (10) anzunähern.

11. Verteilervorrichtung nach einem der vorstehenden Ansprüche, **dadurch gekennzeichnet, dass** jeder Greifarm (7, 188) ein Greifende (7a, 190) aufweist, das als eine durch einen Stützarm (92) getragene Zange ausgebildet ist.

12. Verteilervorrichtung nach dem vorstehenden Anspruch, **dadurch gekennzeichnet, dass** das als Zange ausgebildete Greifende (7a, 190) geeignet ist, an mindestens einer Führungsbahn (13, 14) für Behälter vorbeizufahren.

13. Verteilervorrichtung nach einem der vorstehenden Ansprüche, **dadurch gekennzeichnet, dass** das Verteilerrad (8) eine erste Anordnung von Greifarmen (7, 188) aufweist, deren Bewegung durch eine Laufbahn (91, 184) geführt wird, die in einer unteren transversalen feststehenden Platte (90b, 184) ausgebildet ist, und eine zweite Anordnung von Greifarmen (7, 188), deren Bewegungen durch eine Laufbahn geführt wird, die in einer oberen transversalen feststehenden Platte (90a) ausgebildet ist.

14. Verteilervorrichtung nach einem der vorstehenden Ansprüche, **dadurch gekennzeichnet, dass** jeder Greifarm (7, 188) ein Anschlagmittel (97, 187) aufweist, das geeignet ist, die Verschiebung des Greifarms (7, 188) zu begrenzen.

15. Verteilervorrichtung nach einem der Ansprüche 5 bis 7, **dadurch gekennzeichnet, dass** die Laufbahn (91) aufweist:
- einen ersten Winkelabschnitt (110), der einer im Wesentlichen kreisbogenförmigen Bewegung der Greifarme (7) entspricht,
- einen zweiten Abschnitt (111), in dem sich die Rollen (98) der Rotationsachse (10) des Verteilerrads (8) annähern, wobei diese Bewegung gegen Federn (93) wirkt,
- einen dritten Winkelabschnitt (112), in dem die Rollen (98) in einer Rille (113) rollen, die sich von der Rotationsachse (10) des Auswurfrads (8) entfernt,
- einen vierten Winkelabschnitt (115), wobei die Platte (90a, 90b) zwischen dem dritten Abschnitt (112) und dem vierten Winkelabschnitt (115) mit einem Durchgangsloch (116) versehen ist, durch das ein den einziehbaren Abschnitt ausbildender beweglicher Mitnehmer (120a, 120b) hindurchgeht.
